## Europäisches Patentamt
## European Patent Office
## Office européen des brevets

(19)

(11) Veröffentlichungsnummer: **0 046 222**
**B1**

(12)

# EUROPÄISCHE PATENTSCHRIFT

(45) Veröffentlichungstag der Patentschrift:
04.04.84

(21) Anmeldenummer: 81105961.7

(22) Anmeldetag: 29.07.81

(51) Int. Cl.³: **C 09 K 3/10**, C 09 D 5/34,
C 04 B 41/20, C 04 B 41/24,
C 04 B 19/04, E 04 B 1/66

(54) Verwendung einer Suspension von Kieselsäuregelen als flüssiges Dichtungsmittel zum Abdichten von Bauwerken.

(30) Priorität: 13.08.80 DE 3030512

(43) Veröffentlichungstag der Anmeldung:
24.02.82 Patentblatt 82/8

(45) Bekanntmachung des Hinweises auf die Patenterteilung:
04.04.84 Patentblatt 84/14

(84) Benannte Vertragsstaaten:
AT CH DE FR IT LI LU NL SE

(56) Entgegenhaltungen:
US - A - 3 721 574

(73) Patentinhaber: Jaklin, Hans, Aacher Weg 15 Erlenhof,
D-5500 Trier (DE)

(72) Erfinder: Jaklin, Hans, Aacher Weg 15 Erlenhof,
D-5500 Trier (DE)

(74) Vertreter: Eggert, Hans-Gunther, Dr.,
Räderscheidtstrasse 1, D-5000 Köln 41 (DE)

## Verwendung einer Suspension von Kieselsäuregelen als flüssiges Dichtungsmittel zum Abdichten von Bauwerken

In US-A-3 721 574 sind Zusammensetzungen für das Überziehen von Metall, Glas, Holz und keramischen Materialien beschrieben, die aus einer Suspension von kolloidaler Kieselsäure in einer Alkalisilikatlösung und speziellen Silanverbindungen als Netzmittel bestehen. Die als dünne Filme aufgebrachten Beschichtungen dienen als Feuerschutzanstrich.

Diese Beschichtungszusammensetzungen eignen sich jedoch nicht zum Abdichten von Mauerwerk oder Beton.

Es ist bekannt, Natrium- oder Kaliumsilikate zum Abdichten von Mauerwerk und Beton gegen hindurchdringende oder aufsteigende Feuchtigkeit zu verwenden. Dieses Silikatisieren mit Alkalisilikat wurde in den verschiedensten Formen abgewandelt. Es wurden Gemische von Kali- und Natriumsilikaten empfohlen, sowie die Verwendung von Natriummetasilikat. Die bei dieser Abdichtung erzielten Ergebnisse waren jedoch nicht zufriedenstellend und nicht sicher reproduzierbar. Das war offenbar darauf zurückzuführen, daß das Alkalisilikat nur teilweise mit dem Baukörper reagierte und ein großer Teil durch das durchdringende Wasser wieder ausgewaschen wurde. Auch die Behandlung des zu dichtenden Baukörpers mit sauer reagierenden Substanzen vor oder nach dem Tränken mit Alkalisilikaten, um eine Fällung von schwerlöslicher Kieselsäure zu bewirken, hatte nur teilweise Erfolg. Die ausgefällte Kieselsäure verstopfte im nassen Zustand die Poren, so daß die Alkalisilikatlösung oder die sauer reagierende Substanz nicht tief genug in den Baukörper eindringen konnte. Die später irreversible Schrumpfung der Kieselsäure beim Austrocknen des Baukörpers in trockenen Zeiten führte zu feinen Rissen und Poren, die bei späterem Wasserandrang wieder durchfeuchtet wurden.

Eine wesentliche Verbesserung brachte die Verwendung von Alkalisilikaten mit einem großen Anteil von metastabiler Kieselsäure, die durch die in jedem Baukörper oder Mauerwerk vorhandenen Salze und Begleitstoffe, die durch das Wasser aus dem umgebenden Erdreich in den Baukörper eingedrungen sind, in unlösliche Silikate überführt wurden.

Bei Vorhandensein von Rissen und großen Hohlräumen reicht die in Lösung befindliche Kieselsäure zur Abdichtung nicht immer aus. Aufgabe der Erfindung ist es, daß aus FR-A-2 218 445 bekannte Dichtungsmittel aus einer Alkalisilikatlösung mit einem Anteil von über 50%, bezogen auf den gesamten $SiO_2$-Gehalt zu verbessern, um es als flüssiges Dichtungsmittel für anorganische Baukörper verwenden zu können.

Diese Aufgabe wird gelöst durch die Verwendung einer Suspension von Kieselsäurexerogelen oder -hydrogelen in einer Alkalisilikatlösung mit darin metastabil gelöster Kieselsäure und einem $M_2O$-zu-$SiO_2$-Gewichtsverhältnis 1 : 3 bis 1 : 12 als flüssiges Dichtungsmittel zum Eindrücken in anorganische Baukörper.

In den Unteransprüchen sind bevorzugte Ausführungsformen der Erfindung beschrieben.

Überraschenderweise wurde gefunden, daß das Dichtungsmittel, das aus einer Alkalisilikatlösung mit einem Anteil von metastabil gelöster Kieselsäure von über 50%, bezogen auf den gesamten $SiO_2$-Gehalt, besteht, wesentlich verbessert werden kann, wenn man ihm ein Hydrogel oder ein Xerogel oder ein Hydrosol der Kieselsäure oder eine Suspension eines Kieselsäurexerogels oder -hydrogels in solcher Menge zusetzt, daß die dann entstehende Suspension insgesamt ein $Me_2O$-zu-$SiO_2$-Gewichtsverhältnis von 1 : 3 bis 1 : 12 besitzt. Me bedeutet hierbei Na oder K oder Gemische dieser Alkaliionen. Es hat sich überraschenderweise gezeigt, daß die Stabilität der in der Alkalisilikatlösung gelösten Kieselsäure groß genug ist, daß sich auch im Kontakt mit den suspendierten Xerogelen oder Hydrogelen noch über einen für die Verwendung ausreichenden Zeitraum in ihrem metastabilen Zustand verbleibt. Durch die partielle Auflösung der suspendierten Teilchen des Kieselsäurexerogels und -hydrogels werden die Mengen und Konzentrationen an metastabiler Kieselsäure noch erhöht.

Die als Ausgangsmaterial benutzte Alkalisilikatlösung mit einem hohen Anteil an metastabil gelöster Kieselsäure hat zweckmäßigerweise einen $SiO_2$-Gehalt von 15 bis 25 Gew.-% und durch die Mitverwendung von Carbonaten bei ihrer Herstellung einen Carbonatgehalt gerechnet als $CO_2$ von 0,5 bis 2 Gew.-%. Durch den Zusatz fein verteilter Kieselsäuren in Form eines trockenen Pulvers kann der $SiO_2$-Gesamtgehalt 1 : 10 bei trockenem Xerogel, 1 : 12 bei Suspensionen und Hydrosolen bis auf über 45 Gew.-% erhöht werden.

Das zugesetzte Kieselsäurexerogel hat zweckmäßigerweise eine Oberfläche nach BET von 25 bis 800 m²/g, insbesondere 100 bis 600 m²/g. Ein erfindungsgemäß zugesetztes Hydrogel enthält zweckmäßig 33 bis 66% $SiO_2$ und die Oberfläche nach BET liegt zwischen 250 und 800 m²/g. Sowohl das Xerogel als auch das Hydrogel werden zweckmäßig so fein vermahlen, daß 98 bis 99% $\leq 40$ µm sind. Das erfindungsgemäß zur Erhöhung des $Me_2O$-zu-$SiO_2$-Verhältnisses auf 1 : 3 bis 1 : 12, vorzugsweise 1 : 3 bis 1 : 10 eingesetzte Kieselsäurehydrosol hat zweckmäßigerweise eine BET-Oberfläche bis zu 200 m²/g und einen pH-Wert über 8. Die fertige Suspension hat einen pH-Wert von > 10, vorzugsweise von 11,0 bis 12,1.

Für die erfindungsgemäße Verwendung kann die Suspension noch mit Wasser verdünnt werden. Es hat aber keinen Zweck den für die Anwendung jeweils optimalen Wassergehalt im voraus festzulegen, daß die Bestimmung des Wassergehalts eines Baukörpers in allen seinen Teilen praktisch unmöglich ist und völlig trockene Baukörper, besonders wenn sie gegen eindringendes Wasser abgedichtet werden müssen, nicht existieren. Bei sehr nassen Baukörpern kann die Suspension unverdünnt verwendet weden, in anderen Fällen kann es zweckmäßig sein, sie mit Wasser im Volumenverhältnis 1 : 0,5 bis 1 : 3 zu verdünnen.

Die Suspension wird entweder als solche unverdünnt, oder verdünnt mit an sich bekannten Mitteln bei Drucken von 0,1 N/mm² — 7 N/mm² und max. 25 N/mm² in das Bauwerk eingedrückt. Zwar ist die Suspension für die Anwendungszwecke ausreichend stabil, es ist aber auch möglich, sie aus den Komponenten, nämlich der Alkalisilikatlösung mit einem hohen Gehalt an metastabil gelöster Kieselsäure einerseits und dem Kieselsäurehydrosol der Suspension eines Kieselsäurehydrogels oder -xerogels unmittelbar vor der Anwendung beispielsweise in Mehrstoffdüsen zu mischen. Solche Mehrstoffdüsen bieten auch die Möglichkeit, einer der beiden Komponenten oder als dritte Komponente in wäßriger Suspension noch hydrophobierte Zemente zuzusetzen, die handelsüblich sind und beispielsweise für die Bodenverfestigung benutzt werden.

### Beispiel

Zu 2 kg des Dichtungsmittels nach der FR-PS 2 218 445 mit 19 Gew.-% SiO₂, 7,5 Gew.-% Na₂O (Gew.-Verh. 2,53) und einem pH-Wert von 11,9 werden innerhalb von 15 Minuten 950 g eines Xerogels mit einem Wassergehalt von ca. 5% und einer BET-Oberfläche von 450 m²/g und einer Feinheit von 99% < 40 μm gegeben. Während der Zugabe des Xerogels wird die Suspension kräftig gerührt. Nach der Feststoffzugabe werden noch 15 Minuten weitergerührt.

Die fertige Suspension enthält 44 Gew.-% SiO₂ und 5,08 Gew.-% Na₂O (Gew.-Verh. 8,66). Der pH-Wert fiel auf 11,3 bis 11,4 ab.

Die Suspension war nach der Fertigstellung gut fließfähig und leicht durch Pumpen zu fördern.

Nach 5 Stunden war die Suspension erstarrt, war aber durch geringe Scherkräfte wieder zu verflüssigen. Die Verflüssigung gelang auch noch nach 24 Stunden Standzeit. Innerhalb einer Ruhezeit von weiteren 3 Tagen verfestigte sich die Suspension, so daß für die erneute Verflüssigung erhebliche Scherkräfte aufzuwenden waren. — Der pH-Wert der redispergierten Suspension betrug 11,2.

Es empfiehlt sich, eine Suspension mit einem SiO₂-Gehalt über 40% spätestens 24 Stunden nach der Fertigung zu verarbeiten.

Bei der Herstellung der Suspension muß der feste Stoff immer in die flüssige Phase gegeben werden. Auch ist zu empfehlen, die Kieselsäuresuspensionen oder -hydrosole in das Dichtungsmittel (nach der FR-PS 2 218 445) zu geben.

### Patentansprüche

1. Verwendung einer Suspension von Kieselsäurexerogelen oder -hydrogelen in einer Alkalisilikatlösung mit darin metastabil gelöster Kieselsäure und einem Me₂O-zu-SiO₂-Gewichtsverhältnis 1 : 3 bis 1 : 12 als flüssiges Dichtungsmittel zum Eindrücken in anorganische Baukörper.

2. Verwendung einer Suspension nach Anspruch 1, in der das suspendierte Xerogel eine Oberfläche nach BET von 25 bis 800 m²/g, insbesondere 50 bis 250 m²/g aufweist und so fein vermahlen ist, daß 98 bis 99% ≤ 40 μm sind, für die Zwecke des Anspruchs 1.

3. Verwendung einer Suspension nach Anspruch 1, in der das Kieselsäurehydrogel 33 bis 66% SiO₂ enthält, eine Oberfläche nach BET von 250 bis 800 m²/g hat und so fein vermahlen ist, daß 98 bis 99% ≤ 40 μm sind, für die Zwecke des Anspruchs 1.

4. Verwendung einer Suspension nach einem der Ansprüche 1 bis 3 mit einem pH-Wert über 10,0, vorzugsweise von 11,0 bis 12,1, für die Zwecke des Anspruchs 1.

### Claims

1. The use of a suspension of a silica xerogel or hydrogel in an alkali metal silicate solution, which has metastable silica dissolved therein, the weight ratio of Me₂O to SiO₂ being 1 : 3 to 1 : 12, as a liquid sealing agent for pressing into inorganic construction elements.

2. The use of a suspension as claimed in Claim 1, wherein the suspended xerogel has a BET surface of from 25 to 800 m²/g and is ground so finely that 98 to 99% of the particles are ≤ 40 μm for the purpose of Claim 1.

3. The use of a suspension as claimed in Claim 1, wherein the silica hydrogel contains 33 to 66% of silica (SiO₂), has a BET surface of from 250 to 800 m²/g and is ground so finely that 98 to 99% of the particles are ≤ 40 μm for the purpose of Claim 1.

4. The use of a suspension as claimed in any one of Claims 1 to 3, wherein the suspension has a pH value of more than 10.0, preferably of 11.0 to 12.1, for the purpose of Claim 1.

### Revendications

1. Utilisation d'une suspension de xérogels ou d'hydrogels de silice dans une solution de silicate alcalin contenant de la silice métastable à l'état dissous et présentant un rapport pondéral Me₂O/SiO₂ de 1 : 3 à 1 : 12 en tant que produit d'étanchéité liquide pour l'injection dans des masses de construction minérales.

2. Utilisation d'une suspension selon la revendication 1, dans laquelle le xérogel en suspension a une surface selon BET de 25 à 800 m²/g, plus spécialement de 50 à 250 m²/g, et est broyé suffisamment pour que 98 à 99% des particules soient inférieures ou égales à 40 µm, dans les buts de la revendication 1.

3. Utilisation d'une suspension selon la revendication 1, dans laquelle l'hydrogel de silice contient de 33 à 66% de SiO$_2$, présente une surface selon BET de 250 à 800 m$^2$/g et est broyé suffisamment pour que 98 à 99% des particules aient une dimension égale ou inférieure à 40 µm, dans les buts de la revendication 1.

4. Utilisation d'une suspension selon l'une des revendications 1 à 3, à un pH supérieur à 10,0, de préférence de 11,0 à 12,1, pour les buts de la revendication 1.